# EUROPEAN PATENT APPLICATION

(11) **EP 1 382 549 A1**
(43) Date of publication of application: **21.01.2004**
(21) Application number: 03014474.5
(22) Date of filing: 02.07.2003
(51) Int. Cl.: B65D 90/04, F17C 1/10, C08G 65/40, H01L 23/498, H01L 23/532

(54) **Fluid containment vessel with chemically resistant coating and a method of making the same**

(30) Priority: 08.07.2002 US 191726
(71) Applicant: AIR PRODUCTS AND CHEMICALS, INC., Allentown, PA 18195-1501 (US)
(72) Inventor: Burgoyne, William Franklin, Jr, Allentown, PA 18103 (US); Irven, John, Cryers Hill, High Wycombe (GB); Obadun, Lateef Olusegun Adigun, Slough, Berkshire SL1 3JL (GB); Pearlstein, Ronald Martin, Macungie, PA 18062 (US); Richardson, Ralph James, Macungie, PA 18062 (US); Sistern, Mark Ian, Audlem CW3 0BG (GB)
(74) Representative: Schwabe - Sandmair - Marx

(57) **Abstract**

The present invention is directed to fluid containment vessels having an internal surface coated with an organic coating comprising one or more poly(arylene ethers) polymers and methods for making and using same. When applied to the internal surfaces of fluid containment vessels, the coating reduces the potential for corrosion and mitigates contamination of the chemicals stored therein.

## Description

### BACKGROUND OF THE INVENTION

The present invention relates generally to fluid containment vessels. More specifically, the present invention relates to fluid containment vessels having chemically resistant coatings and methods for making and using same.

Fluid containment vessels for the storage and transportation of liquefied and compressed gases, otherwise referred to as "gas cylinders", are typically made from metals such as steel and other ferrous alloys. The term "fluid" as used herein denotes liquid as well as gaseous forms of a compound. Fluid containment vessels may be used to deliver and store fluids for a variety of industries, including but not limited to, the semi-conductor and electronic manufacturing industries. These industries require the use of fluid containment vessels to store and deliver high purity, corrosive chemicals, such as hydrochloric acid ("HCI"), tungsten hexafluoride ("WF₆"), chlorine ("Cl₂"), hydrogen bromide ("HBr"), nitrogen trifluoride ("NF₃"), silanes and boron trichloride ("BCl₃"), in its manufacturing fabrication processes. However, when the vessels are used for these purposes, the vessels may become a main source of undesired metallic contamination in the end product.

It is well known that the storage of reactive or corrosive chemicals in metallic vessels may cause metallic elements to leach out of the vessel and contaminate the chemical contained therein. Furthermore, the stability of some high purity gases may be degraded by contact with some metallic surfaces. The solution often employed by the semi-conductor or electronics industries is to line the interior walls of the vessels with organic or inorganic coatings. These solutions, however, have thus far been unsuccessful due to lack of coating uniformity, poor adhesion, or other defects that expose a portion of the underlying metal wall.

The reference, U. S. Pat. No. 5,928,743 ("Bealky"), describes using rotation mouldable fluoropolymers for coating the internal walls of pressurized gas vessels. The coatings contain either a single layer or multiple layers of ethylene, chlorotrifluoroethylene, or polyperfluoroalkyoxyethylenes. These fluoropolymers may contain adhesion-promoting additives or be applied atop a fluoroplastic layer to aid adhesion. The reference, Japanese Published Patent Application No. 55-115694 ("Tomimoto"), describes coating the internal surface of gas cylinder with trifluorochloroethylene. It has been found that fluoropolymeric coatings, like the coatings in Bealky and Tomimoto, may suffer from adhesion problems as well as difficulties in achieving a defect-free coating.

The references, U.S. Pat. Nos. 5,474,846 and 5,686,141 collectively referred to herein as "Haldenby", describe coating the internal walls of gas cylinders with polyamides and polyolefins such as polyethylene and polypropylene. It is believed, however, that high purity corrosive or reactive gases may penetrate polyethylene and polypropylene coatings and attack the underlying metal surface thereby causing corrosion. The corrosion product can then migrate back to contaminate the high purity gas.

The reference WO 99/43445 referred to herein as "Barone" describes coating the inner wall of the gas cylinder with an inorganic, silicon layer. In Barone, a vessel containing silicon hydride gas is subjected to heat and pressures sufficient to decompose the gas and form the silicon layer. The Barone process occurs, however, at relatively high temperatures, 360° to 600°C, which may adversely affect the structural integrity of the underlying vessel. Moreover, the Barone process involves dangerous gases that are subjected to relatively high pressures that may pose health and safety concerns from a manufacturing standpoint.

To overcome the problems associated with some organic and inorganic coatings, some manufacturers of high purity gases offer non-corrosive metal gas cylinders such as pure nickel or nickel-clad steel cylinders. Pure nickel cylinders, however, are relatively expensive, heavy, can only be used at relatively low pressures compared with steel cylinders. The reference, BOC Technology Magazine issue number 6, November 1997, describes nickel-clad cylinders that can be used at pressures typical of steel cylinders. The roller bonding forging processes that are used to produce these cylinders are complicated, expensive and impractical for the production of larger vessels.

Accordingly, there is a need in the art for relatively inexpensive fluid containment vessels that will not contaminate the reactive and corrosive high purity gases contained therein. There is also a need in the art for inner coatings that adhere to the underlying metallic surface without the need for adhesion promoters. Further, there is a need in the art for inner coatings that have good film forming properties thereby providing a uniform, defect-free inner surface. Moreover, there is a need in the art to provide processes to make fluid containment vessels with chemically resistant coatings that does not involve the use of dangerous gases at high temperatures and pressures.

All references cited herein are incorporated herein by reference in their entirety.

### BRIEF SUMMARY OF THE INVENTION

The present invention is directed, in part, to fluid containment vessels and methods for making and using same. The present invention provides metallic pressure vessels that have chemically resistant coatings, such as poly(arylene) ethers, to minimize the contamination of the fluid contained therein. The vessel of the present invention contains a chemically resistant coating that exhibits good adherence to the underlying metallic substrate without necessarily requiring an adhesion promoter or adhesion-promoting layer. Further, the coating provides good film forming properties thereby providing a uniform, defect-free inner surface.

In one embodiment of the present invention, there is provided a fluid containment vessel having a metallic interior surface wherein the surface is substantially free of a metal oxide and an organic coating substantially covering the metallic interior surface. The organic coating comprises a poly(arylene ether) polymer comprising repeating units of the structure: 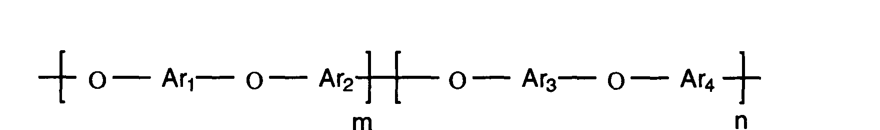 wherein m = 0 to 1.0; and n = 1.0 - m; and Ar₁, Ar₂ , Ar₃ and Ar₄ are individually divalent arylene radicals.

In a further aspect of the present invention, there is provided a metallic interior surface having an average surface roughness ranging from about 0.1 to about 10 microns and an organic coating that substantially covers the metallic interior surface to a thickness of about 0.5 to about 15 microns. The organic coating comprises a poly(arylene ether) polymer comprising repeating units of the structure: 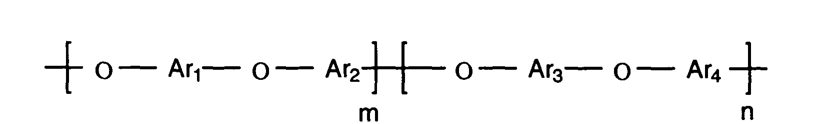 wherein m = 0 to 1.0; and n = 1.0 - m; and Ar₁, Ar₂ , Ar₃ and Ar₄ are individually divalent arylene radicals and wherein the number average molecular weight of the polymer ranges from about 5,000 to about 15,000.

In yet another aspect of the present invention, there is provided a method for forming a chemically resistant, organic coating on a metallic interior surface of a fluid containment vessel. The method comprises: providing a fluid containment vessel having a metallic, interior surface with an average surface roughness ranging from about 0.1 microns to about 4 microns; coating the interior surface with a solution comprising a poly(arylene ether) polymer and a solvent; exposing the interior of the vessel to an inert gas flow to remove at least a portion of the solvent from the solution; and heating the vessel to one or more temperatures sufficient to form the organic coating.

These and other aspects of the invention will become apparent from the following detailed description.

### BRIEF DESCRIPTION OF SEVERAL VIEWS OF THE DRAWINGS

FIG. 1 provides a scanning electron micrograph showing the coating and substrate interface of an embodiment of the present invention.
FIG. 2a provides the charge transfer resistance measurements for certain embodiments of the present invention having an approximately 3 micron coating.
FIG. 2b provides the charge transfer resistance measurements for certain embodiments of the present invention having an approximately 9 micron coating.
FIG. 3a provides the coating resistance measurements for certain embodiments of the present invention having an approximately 3 micron coating.
FIG. 3b provides the coating resistance measurements for certain embodiments of the present invention having an approximately 9 micron coating.
FIG. 4a illustrates the relationship between moisture and pressure for three comparative specimens having an approximately 800 micron modified polyolefin polymer coating.
FIG. 4b illustrates the relationship between moisture and pressure for three embodiments of the present invention having an approximately 9 micron thick coating.
FIG. 5 depicts the comparison of the amount of hydrogen evolved measured in ppm vs. days after fill with electronics grade HCI for certain embodiments of the present invention and uncoated fluid containment vessels.

### DETAILED DESCRIPTION OF THE INVENTION

The present invention is directed, in part, to fluid containment vessels and methods for making and using same. The present invention provides metallic pressure vessels that have chemically resistant coatings, such as poly(arylene) ether polymeric coatings, to minimize the contamination of the fluid contained therein. The vessel of the present invention contains a chemically resistant coating that exhibits good adherence to the underlying metallic substrate without necessarily requiring an adhesion promoter or an adhesion-promoting layer. Further, the coating provides good film forming properties thereby providing a uniform, defect-free inner surface.

The fluid containment vessels of the present invention include any vessel capable of containing a fluid, particularly gases, under high pressure. In this connection, the vessel preferably has sufficient wall thickness, strength, and structural integrity to withstand the pressures required for storage. The fluid contained within the vessel is typically subjected to pressures greater than about 0 psig; however, it is envisioned that some fluids may be subject to a partial vacuum, i.e., below 0 psig, at lower temperatures. In certain preferred embodiments of the present invention, the vessel may be any metallic vessel such as the standard steel industrial cylinders that have closed end and a tapered threaded neck suitable for receiving a valve at the opposite end. However, other configurations of vessels suitable for the containment of a fluid under the pressures employed and compatible with the organic coating in the present invention may be used.

The vessels of the present invention are used to transport, store, or deliver a fluid, preferably a high purity, corrosive gas used in the manufacture of semiconductors or electronic devices. The term "high purity" as used herein refers to having a total impurity level in the gas below about 500 parts per million ("ppm") of gas by weight. The impurity level is more preferably below 5 ppm of gas by weight and most preferably below about 1ppm parts of gas by weight. Exemplary high purity gases include, but are not limited to, hydrochloric acid ("HCI"), tungsten hexafluoride ("WF₆"), chlorine ("Cl₂"), hydrogen bromide ("HBr"), nitrogen trifluoride ("NF₃"), silanes, and boron trichloride ("BCl₃"). High, or 99.999%, purity electronics-grade HCI gas used in the manufacture of semiconductors or electronic devices refers to HCI gas having less than 2 ppm by volume CO₂, less than 1 ppm by volume CO, less than 1 ppm by volume methane, less than 2 ppm by volume N₂, less than 1 ppm by volume O₂ and Ar, less than 1 ppm by volume water, less than 0.5 ppm by volume Fe, and less than 1 ppm by volume other metals.

The fluid containment vessels of the present have an interior surface that is substantially covered with a chemically resistant, organic coating that contains one or more poly(arylene ether) polymers. Examples of suitable poly(arylene ether) polymers include those polymers described in U. S. Pat. Nos. 5,658,994 and 5,874,516, which are assigned to the assignee present invention and incorporated herein by reference in their entirety. In certain preferred embodiments of the present invention, the organic coating contains a poly(arylene ether) polymer comprising repeating units of the structure: 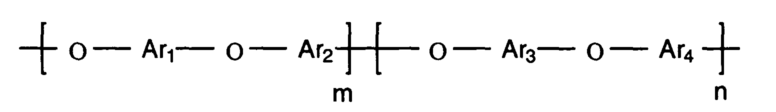 wherein m = 0 to 1.0; and n = 1.0 - m.

The monomers Ar₁, Ar₂, Ar₃ and/or Ar₄, which represent one or more aromatic ring structures can be selected from the following structures (in the dihalogenated form, Ar₂ and Ar₄, or the dihydroxy form, Ar₁ and Ar₃, prior to polymerization, preferably the dibrominated form for the dihalogenated form and preferably the potassium, sodium or lithium form for the dihydroxy, respectively, wherein the mix of monomers is such that a dihalogenated monomer, Ar₂ and/or Ar₄, and a dihydroxy monomer, Ar₁ and/or Ar₃, are selected for co-etherification in the Ullman condensation; and Ar₁, Ar₂, Ar₃ and Ar₄ together cannot be isomeric equivalents unless compound I, diradical 9,9-diphenylfluorene, is present, because of crystallization problems, but subsets of less than all the Ar structures can be isomeric equivalents):
A - phenylene: 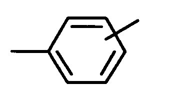
B - biphenyl diradical: 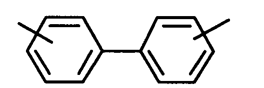
C - para-terphenyl diradical: 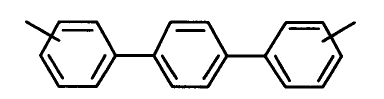
D - meta-terphenyl diradical: 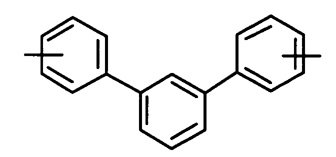
E - ortho-terphenyl diradical: 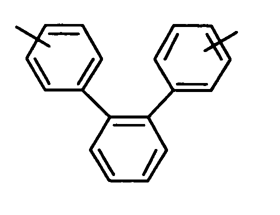
F - naphthalene diradical: 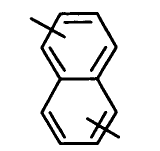
G - anthracene diradical: 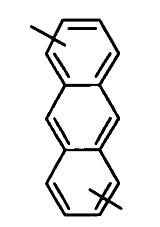
H - phenanthrene diradical: 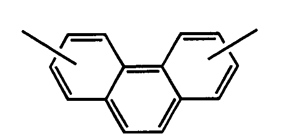
I - diradical of 9,9-diphenylfluorene of the type: 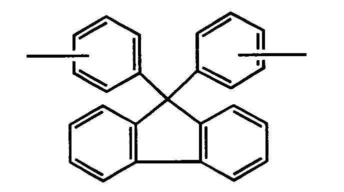
J - 4,4'-diradical of dibenzofuran

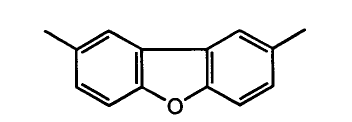

The polymers contained in the organic coating of the present invention can be homopolymers, consisting essentially of a single repeat unit, such as one of the aforementioned phenylene or biphenyl diradical and the I structure fluorene derivative combination or the polymers can be copolymers comprising a repeat unit of the structure of the present invention in combination with other repeat units of polyols and phenyls known in the art. For instance, the poly(arylene ether) polymers of the present invention can be a copolymer of the etherification of phenylene A with 9,9-bis(4-hydroxyphenyl)fluorene and biphenyl diradical B similarly etherified with the named fluorene derivative. Various combinations of compounds A through J are also possible, so long as if the same monomer is used it has differing isomeric structure.

In a copolymer where repeating units are combined with the repeat unit of another type of polymer, it is preferred that at least 60 mole %, more preferably at least 80 mole % of the repeat units are the polymers of the present invention. A copolymer can be alternating, random or block.

The poly(arylene ether) polymers are considered non-functional in that they are chemically inert and do not bear any functional groups that may contaminate the high purity gases contained within the vessel. They do not have carbonyl moieties such as amide, imide, and ketone, which promote adsorption of water. Further, they do not bear halogens such as fluorine, chlorine, bromine, and iodine that can react with metal sources in metal deposition processes. Rather, they are composed of essentially aromatic carbons, except for the bridging carbon in the 9,9-fluorenylidene group, which has much of the character of aromatic carbons due to its proximity to aromatic structures. For purposes of the present invention, that carbon is deemed to be a perphenylated carbon.

The poly(arylene ether) polymer within the organic coating has a number average molecular weight that ranges from about 5,000 to about 15,000, preferably about 7,000 to about 15,000, and more preferably about 10,000 to about 15,000. Synthesis techniques to form the poly(arylene ether) polymers are described, for example, in U. S. Pat. Nos. 5,658,994 and 5,874,516. Still further synthesis techniques include the nickel catalyst coupling syntheses reported in I. Colon et al., J. Poly. Sci., Part A, Poly. Chem., Vol. 28, pp 367-383 (1990) which is incorporated herein by reference in its entirety.

Structures of some specific poly(arylene ether)s within the organic coating include the following: 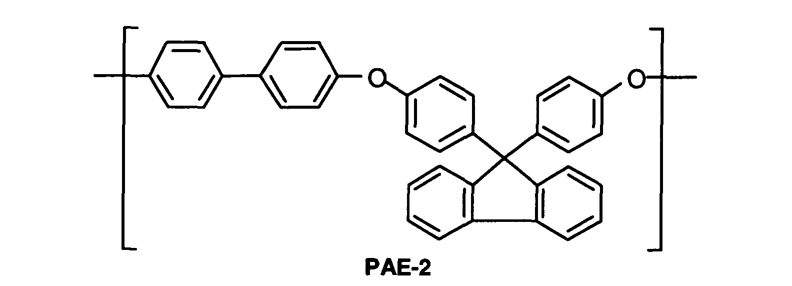 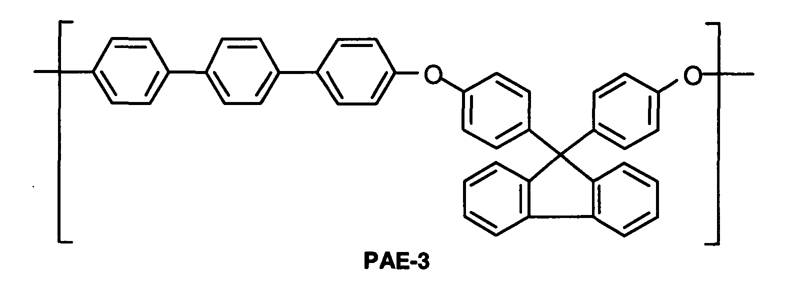 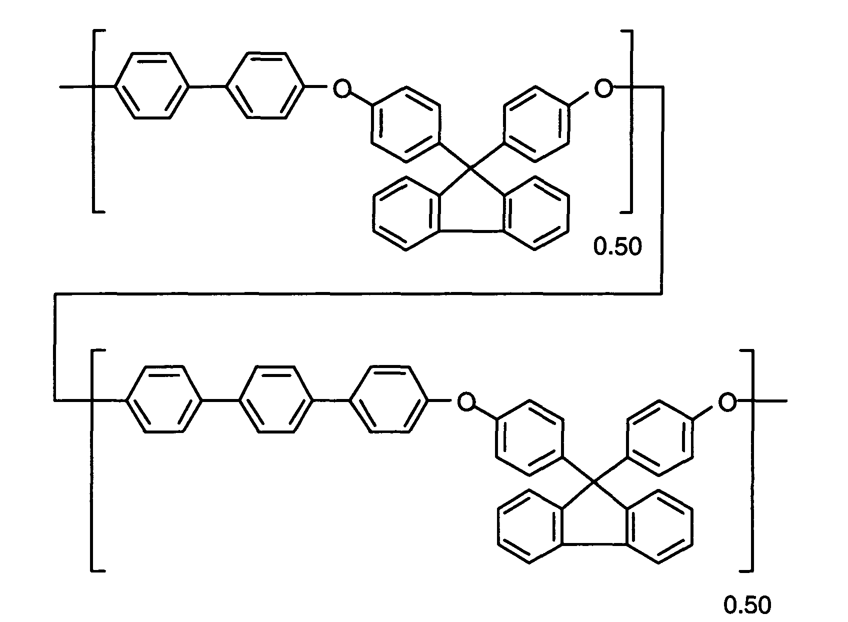 In certain preferred embodiments of the present invention, the poly(arylene ether) polymer comprises PAE-II. However, other poly(arylene ether) polymers or mixtures thereof may be suitable within the organic coating.

The organic coating containing one or more poly(arylene ether) polymers is applied to the interior surface of the vessel via a variety of techniques including spraying, spin coating, rotation molding, dip coating, powder coating, or casting. In preferred embodiments of the present invention, the polymer is applied to the vessel in the form of a solution. The poly(arylene ether) polymer, which may be in the form of a particulate such as a powder or pellet, can be made into a coating solution by combining the polymer with any solvent that is capable of dissolving the powder. Exemplary solvents include, but are not limited to, 2-ethoxyethyl ether, cyclohexanone, cyclopentanone, toluene, xylene, chlorobenzene, N-methyl pyrrolidinone, N,N-dimethylformamide, N,N-dimethylacetamide, methyl isobutyl ketone, 2-methoxyethyl ether, 5-methyl-2-hexanone, γ-butyrolactone, tetrahydrofuran, methylene chloride, chloroform, and mixtures thereof. The dissolution of the polymer into the solvent preferably occurs at one or more temperatures that range from approximately 60°C to approximately 90°C under continuous stirring.

The concentration of the coating solution may range from about 5% to about 20%, preferably about 10% to about 15% weight percent solid. The viscosity of the coating solution ranges from about 200 centipoise ("cps") to about 800 cps as measured at room temperature using a Brookfield Rotary Electromechanical Viscometer number 3 spindle.

In addition to the poly(arylene ether) polymer, the solution applied to the interior surface of the vessel can further comprise additives to enhance or impart particular target properties. These additives may include stabilizers, flame retardants, pigments, plasticizers, surfactants, and the like. Compatible or non-compatible polymers can be blended in to give a desired property.

The solution can further include an adhesion promoter to enhance adherence of the poly(arylene ether) polymers to the appropriate substrates. Such promoters are typified by hexamethyldisilazane, which can be used to interact with available hydroxyl functionality that may be present on a surface, such as silicon dioxide, which has been exposed to moisture or humidity that creates such hydroxyl functionality. In preferred embodiments, however, the coating solution does not need an adhesion promoter because poly(arylene ether) polymers exhibit excellent adherence to a variety of substrates. For example, it has been demonstrated in U. S. Pat. No. 5,874,516, which is commonly assigned to the assignee of the present invention, that the adhesion strength of a coating containing PAE-II to a SiO₂ substrate may be stronger than the cohesive strength of the SiO₂ substrate itself.

The substrate that the coating solution is applied to, or the interior surface of the vessel, is preferably cleaned of mill scale, metal oxides such as rust, and/or foreign materials. In certain preferred embodiments, the interior surface is substantially free of a metal oxide such as rust. Rust may be removed from the vessel via chemical pretreatment such as the acid cleaning method described in Japanese Patent Application 55-115694. Alternatively or in addition, the interior surface of the vessel may be mechanically polished to remove metal oxide, mill scale, and/or other foreign materials and to reduce the surface roughness.

The thickness of the organic coating on the substrate, or interior surface of the vessel, may be influenced by the average surface roughness ("Rₐ") of the surface. The thickness of the organic coating ranges from about 2.5 to about 15 microns, more preferably about 3 to about 10 microns. The average thickness of a single coating layer is approximately 3 microns. Therefore, a 9 micron coating is comprised of about 3 coating layers. The Rₐ of the interior surface ranges from about 0.01 microns to about 10 microns, preferably about 0.01 to about 4 microns. Consequently, surfaces having a Rₐ greater than 4 micron surface may require a thicker organic coating, i.e., a thickness greater than 10 micron, to provide a uniform, defect-free film.

In preferred embodiments of the present invention, the organic coating is applied to the interior surface of the vessel via a rotation molding technique. Examples of rotation molding techniques suitable for applying the organic coating are found, for example, in U. S. Pat. Nos. 5,474,846 and 5,686,141. The coating solution is prepared and cooled to ambient temperature. The solution is then poured into the vessel and rolled with the cylinder in a horizontal position on the rolling machine for a time sufficient to ensure complete wetting of the internal surface of the vessel. In some embodiments of the present invention, the cylinder is rotated in more than one position, i.e., vertically or at a 45° or other angular position, to ensure complete wetting. The coating solution is then poured out of the vessel and any excess is drained by inverting the vessel. The excess solution may be collected and reused in subsequent steps, preferably after removing any impurities.

Once the surface is coated, the vessel is heated to one or more temperatures and for a time sufficient to form the chemically resistant, organic coating. The organic coatings may be either thermoplastic (wherein the polymer contained therein is not cross-linked) or thermoset (wherein at least a portion of the polymer contained therein is cross-linked) depending upon the temperature range to which the vessel is heated. To form a thermoplastic coating, the vessel is subjected to temperatures that range from about 200°C to about 300°C, more preferably about 250°C to about 275°C. The vessel is heated for about 10 to about 30 minutes, preferably about 10 to about 20 minutes. An inert gas, such as nitrogen or helium, is flowed into the vessel at about 200 ml/min to about 1000 ml/min, preferably about 200ml/min to about 500 ml/min, to remove at least a portion of the solvent from the coating solution.

The organic coating may can be made into a thermoset film by subjecting the film formed on the internal walls of the vessel to subsequent and/or higher thermal treatments. Thermal treatment of the film to a temperature ranging from about 350°C to about 500°C, preferably about 350 to 450°C, may cause at least a portion of the polymer to cross-link and form the thermoset film. This treatment may occur in either an air or inert gas atmosphere. A thermoset coating may also be formed by adding a crosslinking agent within the coating solution as well as end capping the poly (arylene ether) polymer with known end cap agents, such as phenylethynyl, benzocyclobutene, ethynyl and nitrile. The thermal treatment to form a thermoset coating may be performed after each layer is formed, or once all of the layers that form the coating are complete.

Each coating and heating step provides a layer having a thickness that ranges between about 1 and about 5 microns, preferably about 2 to 4 microns. The organic coating may be built by repeating the coating and heating steps from 0 to 5 times, preferably from 2 to 4 times to form the organic coating. The number of times that the coating and heating step is repeated may also be influenced by the Rₐ of the interior surface of the vessel. For example, a surface with a Rₐ greater than about 4 microns would require the application of more layers to provide a coating thickness greater than 10 microns.

The invention will be illustrated in more detail with reference to the following examples, but it should be understood that the present invention is not deemed to be limited thereto.

### EXAMPLES

### Preparation of a Fluid Containment Vessel Having an Internal Lining of Poly(arylene ether) Polymer

A fluid containment vessel having an organic coating containing a PAE-II poly (arylene ether) polymer is prepared in the following manner. A coating solution is prepared by dissolving a 100g quantity of PAE-ll powder into a 1 litre quantity of cyclohexanone at a temperature of 60°C with continuous stirring and a nitrogen atmosphere. The solution is allowed to cool to room temperature.

The coating solution is poured into a clean, steel cylinder having an internal wall smoothness of Rₐ ≤ 4µm. The cylinder is capped with a plastic plug and placed on a rolling machine manufactured by Middleton & Co U.K Limited until the internal surface of the cylinder is completely wetted or about 15 minutes. The cylinder is removed from the rolling machine and inverted to pour out any excess coating solution. The excess solution is collected into a beaker and set aside. The cylinder remained in the inverted draining position for 15 minutes.

The cylinder was equipped with a special gas adaptor that allowed for the flow and removal of an inlet gas at the fill end. The cylinder was then placed upright into an oven that was pre-heated to a temperature of about 250°C. The cylinder was connected to an inlet gas source and the vent to the adaptor. A continuous flow of nitrogen was run through the cylinder at 200cc/min. for 30 minutes to form a thermoplastic organic layer. The cylinder was then removed from the oven and allowed to cool down to room temperature. The foregoing steps were repeated until the desired coating thickness was reached.

### Contact Angle, Adhesion and Coating Thickness

A cylinder having an interior PAE-II organic coating was prepared in accordance with the method described above. The contact angle, adhesion, and coating thickness of the organic coating were measured and the results are provided in Table I.

The contact angle of the coating was determined using a Krüss G40 goniometer and triple distilled water to measure both advanced and receded angles on the coated surface of the cylinder sections. The mean of four measurements was taken and is provided in Table I. The contact angle of the coating relates to the hydrophobicity of the coating surface. The higher the contact angle, the more hydrophobic the surface is.

Adhesion measurements of the coating were taken as follows. Three lines were scribed, approximately 2mm apart in each of two perpendicular directions, to produce an overlapping array of twenty-five unit cells. These lines were made relatively close to the center on the coated surface of each cylinder section. A crosshatch peel test was then performed using 3M 898 adhesive tape in directions both parallel and perpendicular to the curvature of the cylinder. The adhesive tape and cylinder surfaces were then examined, using optical microscopy at a magnification of 45, to look for any failure within the coating. The results of this test are provided in Table I. Table I provides the number of cells removed during the pull test. The lower the number of cells removed, the better the adhesion of the coating to the substrate.

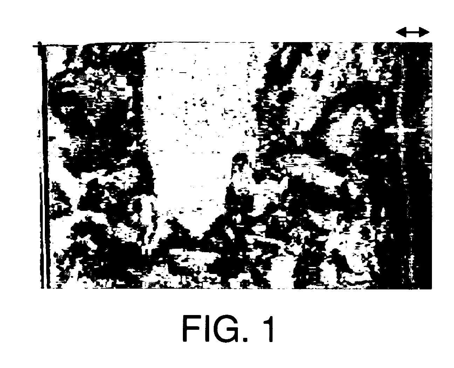

For thickness measurements, test samples were prepared by thinning the cylinder section from the convex side followed by immersion in liquid nitrogen. These samples were then cold-fractured using a hammer to produce a cleavage face on the coated concave side suitable for examination by scanning electron microscope ("SEM"). Figure 1 is a SEM that depicts the coating/substrate interface of one of these samples. Variable results of the thick nesses of the samples were due to smearing of the coatings during the polishing process. Coating thickness results are shown in Table I.

**TABLE I:**

| Contact angle, Adhesion and Coating Thickness Measurements | | | |
|---|---|---|---|
| **Contact Angle** Average Of 4 Measurement | | **Adhesion** X-Hatch Peel Test | **Coating Thickness** SEM of Cross-Section |
| Advanced Angle | Receded Angle | 3m 898 Adhesive Tape | |
| 91+/- 2° | 62 +/- 5° | Total Cells = 25 Cells removed = 0 | >=3micron |

### Electrochemical Impedance Spectroscopy ("EIS")

Cylinders having approximately 3 micron, PAE-II organic coatings on the interior walls were prepared in accordance with the method described above and sectioned into test coupons. EIS Impedance tests were conducted on these coupons and the results of these tests are provided in Table II(a). Results of similar tests conducted on specimens having thicker, approximately 9 micron coatings are provided in Table II(b).

The EIS test involves a small sinusoidal voltage perturbation of varying frequency to an electrochemical system. The electrochemical system is viewed as a network combination of resistors and capacitors, wherein the circuit consists of coating capacitor that is connected in parallel with the polymer resistor, that is, in turn, connected in series with the double layer capacitor, that is, in turn, connected in parallel to the pore resistor. Through the use of geometrical and software methods, values may be assigned to the appropriate resistors and capacitor which provide a close analogy to the real data. The resultant responses of current and phase shift are displayed in a Nyquist or Bode plot.

Two important measurements of the EIS model are the coating resistance (R_{*c*}) and charge transfer resistance (R_{*ct*}) of the sample. The R_{*c*} provides a measure of the coating quality and how it changes with thickness and environment. The R_{*ct*} provides a measure of the degree of protection that the coating provides the underlying steel. Low charge transfer resistance indicates solution access through pores in the coating to the bare substrate. Thus, the corrosion rate is inversely proportional to the charge transfer resistance.

Test coupons were immersed in a 0.01 M HCI solution for a number of days. Impedance tests were run on the test coupons under AC current as follows: range of frequency 30000 to 0.01 Hz, maximum amplitude of 20 mV and exposed surface area to the 0.01 M HCI solution is 1 cm². The coating and charge transfer resistance were measured after a certain number of days and the results are provided in Tables II(a) and II(b) for approximately 3 micron and approximately 9 micron coatings, respectively.

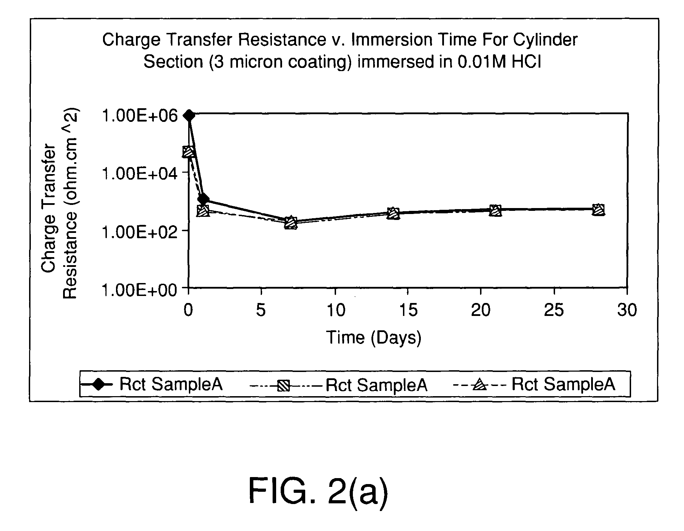

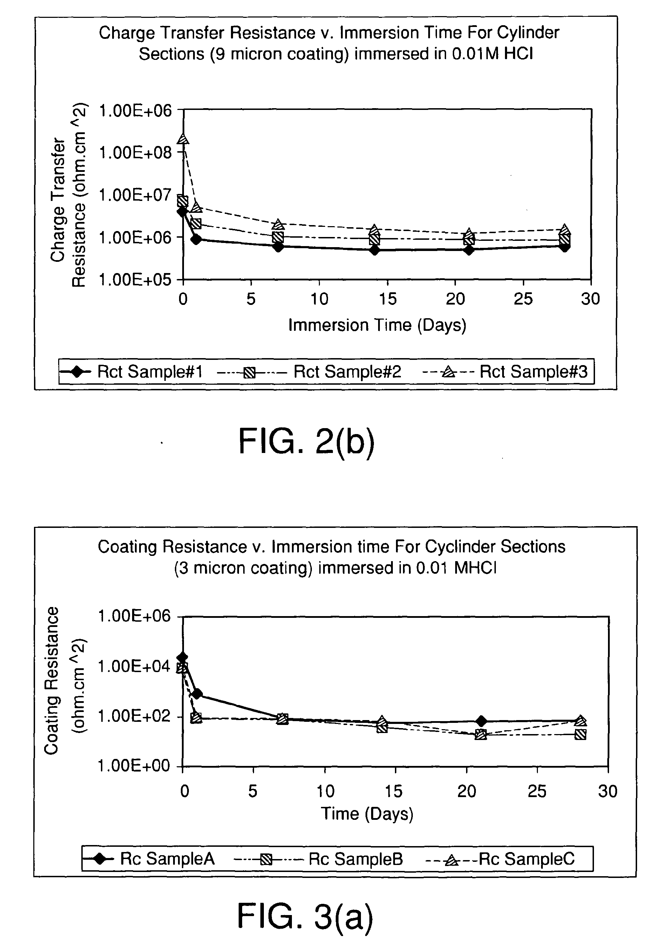

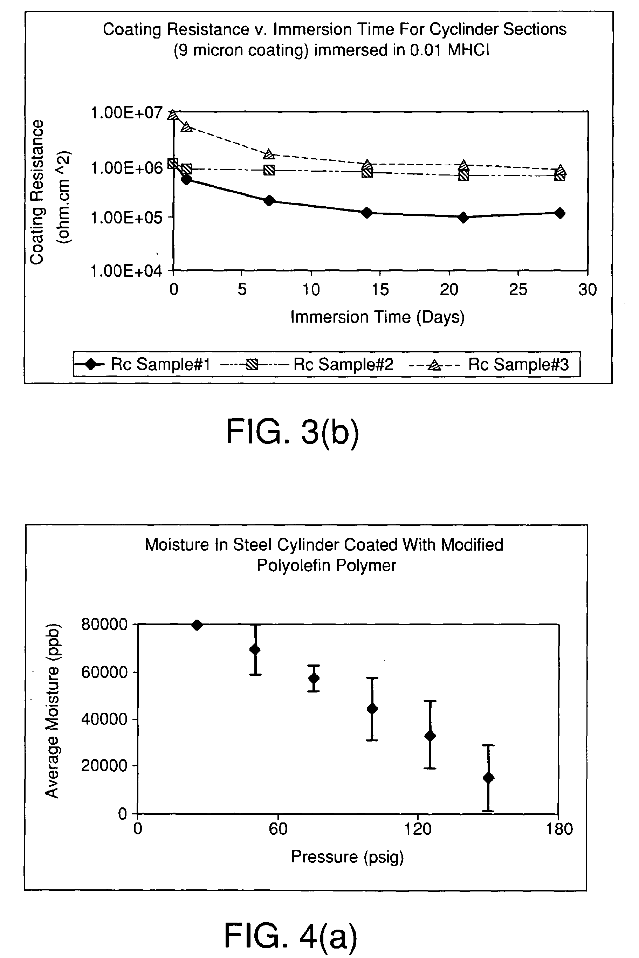

FIGs. 2a and 2b provide an illustration of the charge transfer resistance vs. immersion times for three specimens having approximately 3 micron and approximately 9 micron thick coatings, respectively. FIGs. 3a and 3b provide an illustration of the coating resistance vs. immersion times for three specimens having approximately 3 micron and approximately 9 micron thick coatings, respectively

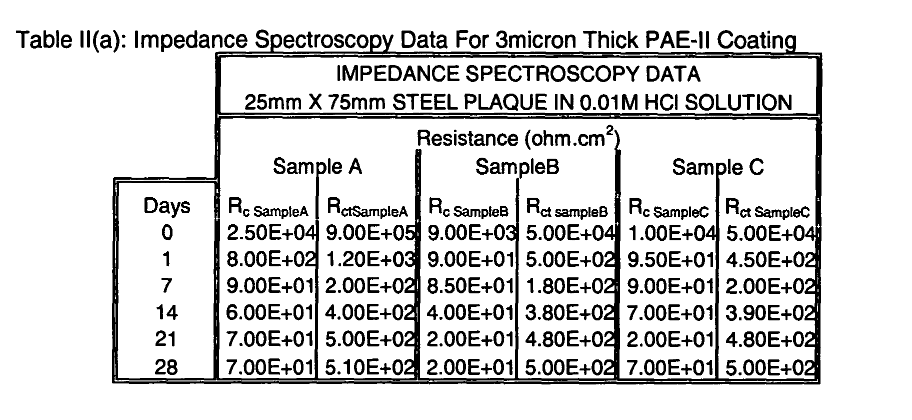

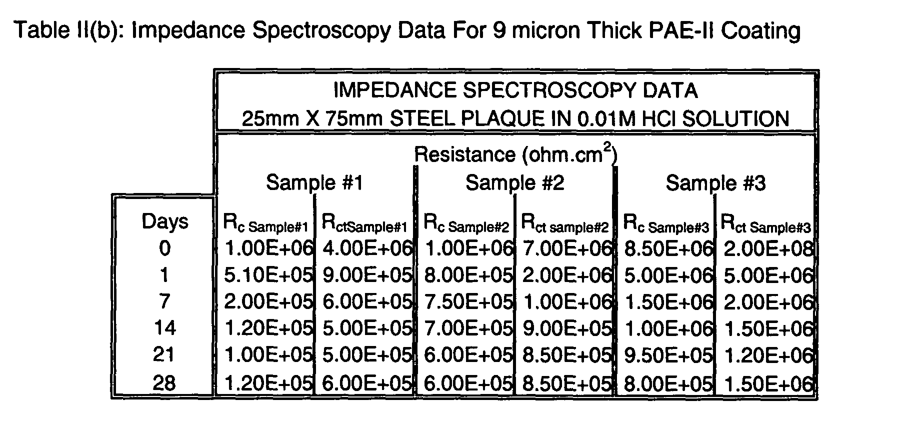

As the Tables II(a) and II(b) and FIGs. 2(a), 2(b), 3(a), and 3(b) illustrate, all of the coated coupons showed a noticeable drop in both charge transfer and coating resistance over the first few hours of exposure to the test environment. This is common with most coating systems. It is believed that the fall in coating resistance is due to the penetration of water into the polymer with the corresponding increase in the dielectric constant of the film and decrease in film resistance. The fall in charge transfer resistance may be due to the setting up of micropores in the coating and the corrosion of the steel substrate at the base of these pores. The corrosion rate is inversely proportional to the charge transfer resistance.

All the samples exhibited a relatively high coating resistance and charge transfer resistance with some variation amongst the specimens as seen particularly in Tables II(a) and FIGs. 2(a) and 3(a). Comparisons between the 3 micron and 9 micron coatings illustrate the important relationship between coating thickness and surface roughness of the substrate. Surfaces with relatively high Rₐ require a thicker coating than surfaces with lower Rₐ. For the thinner, 3 micron coatings, coating resistance and charge transfer resistance are much lower over the same test periods than in the thicker coatings. In FIGs. 2b and 3b and Table II(b), the specimen with the highest results, Sample #3, represents the best achievable performance. The specimen with the lowest results, Sample #1, may exhibit some defect or pore within the coating. Improvements may be made in the coating and charge transfer resistance by minimizing potential defects during the coating method.

### Moisture Analysis of Prepared PAE-II Coated Cylinders

Three steel cylinders having an internal coating of PAE-II were prepared in accordance with the method disclosed herein. The cylinders were heated to 70°C using a heating jacket and evacuated overnight. The cylinders were allowed to cool down to room temperature and then filled to a pressure of 180 psig with BIP™ nitrogen manufactured by Air Products and Chemicals, Inc. of Allentown, PA for moisture analysis.

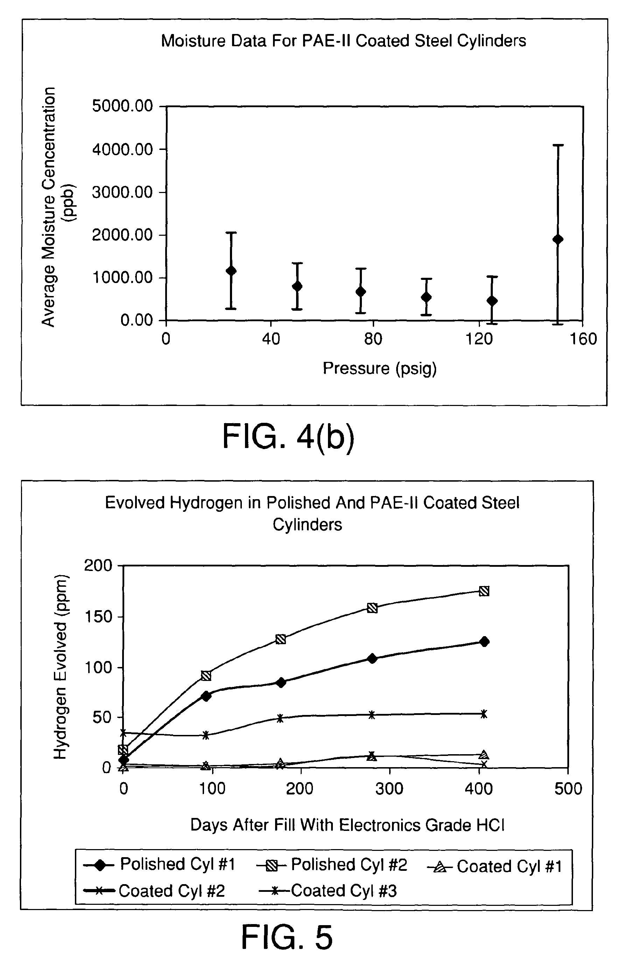

The test cylinders were connected to the Ametek 2850 moisture analyzer and heated to 90°C using the cylinder heating jacket. Gas from the three test cylinders was flowed into the moisture analyzer at a regulated flow rate of 200cc/min. The gas pressure inside the test cylinders was monitored using a pressure transducer model 852B33PCA2GA supplied by MKS. The moisture content of the gas inside the cylinders was monitored and logged continuously using a lotech tempscan/multiscan data logger Model 1200 manufactured by lotech until the pressure inside the cylinders reached 25 psig. The results of the moisture monitoring are provided in Table III(b) and FIG. 4(b). Results of similar measurement made on comparison cylinders coated with approximately 800 microns modified polyolefin are provided in Table III(a) and FIG. 4(a).
The data in FIGs. 4a and 4b provides the average values for three cylinders.

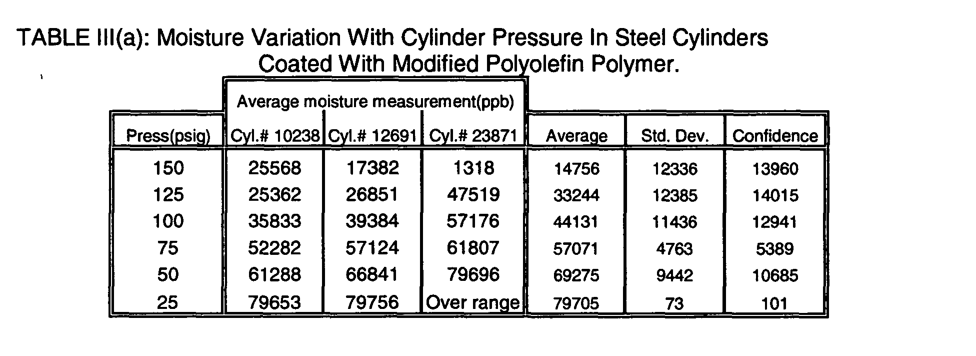

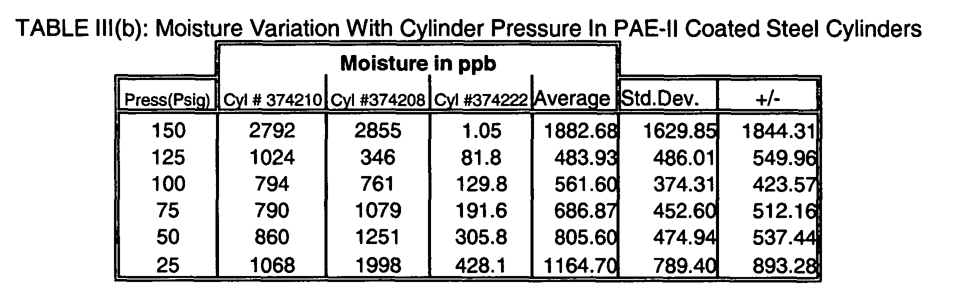

One of the biggest problems encountered with the use of polymeric materials as coatings for the interior of gas cylinders containing electronics grade gases is their high moisture outgasing property. For most polymeric materials such as the modified polyolefin coatings in Tables III(a) and FIG. 4(a), corrosion protection against substrates is only achievable at high thicknesses, i.e., hundreds of micron. It is surprising and unexpected for PAE-ll coatings to exhibit similar or lower moisture measurements for coatings having thicknesses that are an order of magnitude lower, i.e., about 15 microns or below.

### Shelf-Life Study of PAE-II Coated Cylinders Filled with Electronics Grade HCI

Three cylinders having an approximately 9 micron thick coating of PAE-II applied to the interior walls in accordance with the method of the present invention and two standard cylinders with polished interior walls were filled with electronics grade HCI. All the cylinders were fitted with valves compatible with HCI. The amount of evolved hydrogen in each of the five cylinders was measured over a one-year period. Table IV shows the evolved hydrogen over the duration of the study and the results are depicted in FIG. 5.

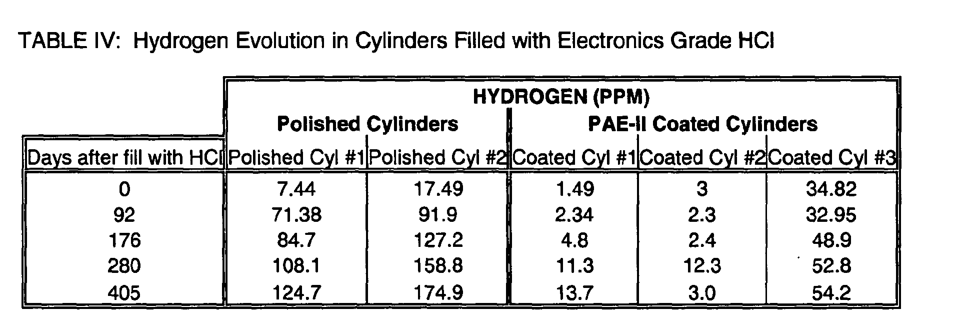

It is believed that HCI reacts with the steel walls of the cylinder and produces H₂. Thus, higher levels of H₂ within the cylinder may be indicative of corrosion of the interior wall surface. The one-year data collected for hydrogen evolution in HCI-filled cylinders coated with PAE-II is consistent with the impedance data of Table II(b) and confirms the protective potential of the coating against the steel substrates. While the PAE-II coated cylinders showed a modest increase in the level of hydrogen evolved over the one year, by contrast, the uncoated cylinders showed a sharp increase in evolved hydrogen over the same period.

While the invention has been described in detail and with reference to specific examples thereof, it will be apparent to one skilled in the art that various changes and modifications can be made therein without departing from the spirit and scope thereof.

## Claims

1. A fluid containment vessel, the vessel comprising:
a metallic interior surface wherein the surface is substantially free of a metal oxide; and
an organic coating substantially covering the metallic interior surface, the organic layer having a poly(arylene ether) polymer comprising repeating units of the structure: 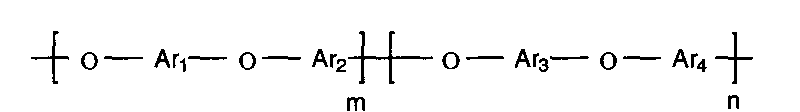
wherein m = 0 to 1.0; and n = 1.0 - m; and Ar₁, Ar₂ , Ar₃ and Ar₄ are individually divalent arylene radicals.

2. The vessel of claim 1 wherein Ar₁, Ar₂ , Ar3 and Ar₄ are individually divalent arylene radicals selected from the group consisting of; 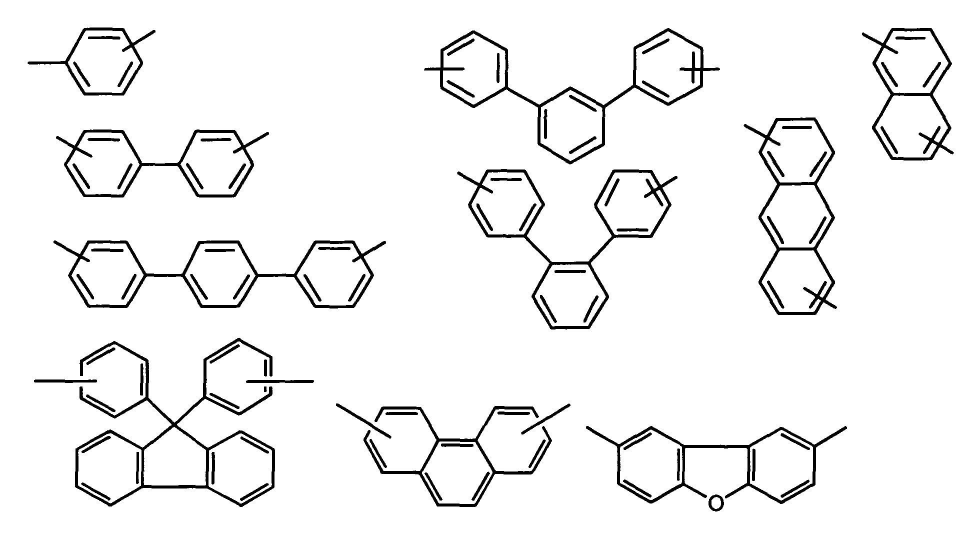 but Ar₁, Ar₂ , Ar3 and Ar₄, other than the diradical 9,9-diphenylfluorene, are not isomeric equivalents.

3. The vessel of claim 1 wherein the organic laver has repeating units of a structure: 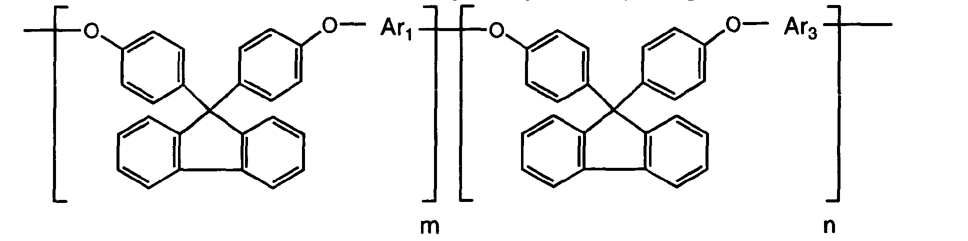 wherein m = 0 to 1.0; and n = 1.0 - m; and Ar₁ and Ar₃ are individually divalent arylene radicals selected from the group consisting of;

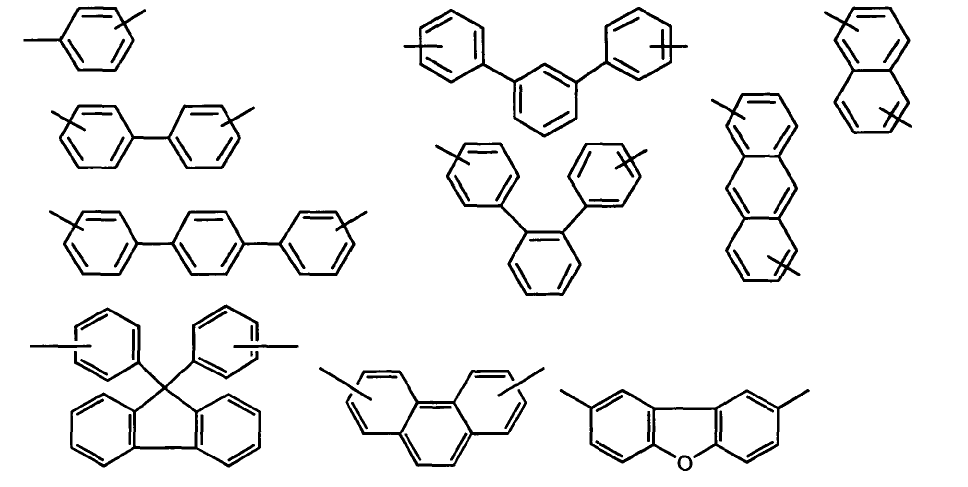

4. The vessel of claim 1 wherein the organic coating has m=0.5-1.0.

5. The vessel of claim 1 wherein the organic coating has m=1 and Ar₁ is biphenyl.

6. The invention according to Claim 1 wherein the organic coating has m=1 and Ar₁ is terphenyl.

7. The vessel of claim 1 wherein the metallic interior surface has an average surface roughness that ranges from about 0.01 microns to about 4 microns.

8. The vessel of claim 7 wherein the thickness of the organic coating ranges from about 2.5 to about 10 microns.

9. The vessel of claim 1 wherein the average surface roughness of the metallic interior surface ranges is greater than about 4 microns.

10. The vessel of claim 9 wherein the thickness of the organic coating is greater than about 10 microns.

11. The vessel of claim 1 wherein the number average molecular weight of the poly(arylene ether) polymer ranges from about 5,000 to about 15,000.

12. The vessel of claim 11 wherein the number average molecular weight of poly(arylene ether) polymer ranges from about 7,000 to about 15,000.

13. The vessel of claim 11 wherein the number average molecular weight of poly(arylene ether) polymer ranges from about 10,000 to about 15,000.

14. A fluid containment vessel comprising:
a metallic interior surface having an average surface roughness ranging from about 0.1 to about 10 microns; and
an organic coating that substantially covers the metallic interior surface to a thickness of from about 2.5 to about 15 microns, the organic coating comprises a poly(arylene ether) polymer comprising repeating units of the structure: 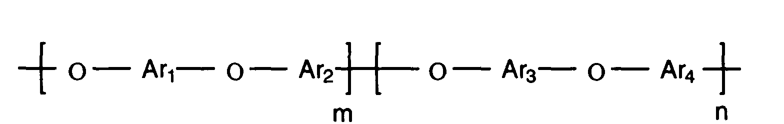
wherein m = 0 to 1.0; and n = 1.0 - m; and Ar₁, Ar₂ , Ar₃ and Ar₄ are individually divalent arylene radicals and wherein the number average molecular weight of the poly(arylene ether) polymer ranges from about 5,000 to about 15,000.

15. The fluid containment vessel of claim 14 wherein the metallic interior surface is substantially free of a metal oxide.

16. A method for forming an organic coating on a metallic interior surface of a fluid containment vessel, the method comprising:
providing a fluid containment vessel having a metallic, interior surface with an average surface roughness ranging from about 0.1 microns to about 4 microns;
coating the interior surface with a solution comprising a poly(arylene ether) polymer and a solvent;
exposing the interior of the vessel to an inert gas flow to remove at least a portion of the solvent from the solution; and
heating the vessel to a temperature sufficient to form the organic coating.

17. The method of claim 16 further comprising heating the vessel to a temperature sufficient to cross-link the polymer.

18. The method of claim 16 wherein the exposing and heating steps are conducted simultaneously.

19. The method of claim 16 wherein the rate of flow of inert gas ranges from 200 ml/min to 1000 ml/min.

20. The method of claim 16 wherein the coating step is repeated until the organic coating reaches a thickness ranging from about 2.5 to about 10 microns.

21. The method of claim 16 wherein the viscosity of the solution ranges from about 200 to about 800 centipoises.
